# EUROPÄISCHE PATENTSCHRIFT

(11) **EP 1 320 409 B1**
(45) Veröffentlichungstag und Bekanntmachung des Hinweises auf die Patenterteilung: **04.02.2004**
(21) Anmeldenummer: 01969641.8
(22) Anmeldetag: 24.08.2001
(51) Int. Cl.: B01D 53/94, F01N 3/10

(54) **VERFAHREN ZUR NOX-REGENERATION EINES NOX-SPEICHERKATALYSATORS**
METHOD FOR NOX REGENERATION OF A NOX STORAGE CATALYST
PROCEDE DE REGENERATION DE NOX DANS UN CATALYSEUR ACCUMULATEUR DE NOX

(30) Priorität: 01.09.2000 DE 10043098
(43) Veröffentlichungstag der Anmeldung: 25.06.2003
(73) Patentinhaber: Volkswagen Aktiengesellschaft, 38436 Wolfsburg (DE)
(72) Erfinder: POTT, Ekkehard, 38518 Gifhorn (DE); ZILLMER, Michael, 38173 Sickte (DE); LINDLAU, Michael, 38162 Cremlingen (DE); HAHN, Hermann, 30175 Hannover (DE); SPIEGEL, Leo, 71665 Vaihingen/Enz (DE)
(86) Internationale Anmeldenummer: PCT/EP2001/009792
(87) Internationale Veröffentlichungsnummer: WO 2002/018034

(56) Entgegenhaltungen:
- EP-A- 0 802 318
- EP-A- 0 899 430
- EP-A- 0 915 244
- WO-A-99/61763

## Beschreibung

Die Erfindung betrifft ein Verfahren zur NO_{X}-Regeneration eines einer zumindest zeitweise stöchiometrisch betreibbaren Verbrennungskraftmaschine nachgeschalteten NO_{X}-Speicherkatalysators mit den Merkmalen des Oberbegriffs des Anspruchs 1.

Es ist bekannt, in Abgaskanälen von Verbrennungskraftmaschinen NO_{X}-Speicherkatalysatoren anzuordnen, die in mageren Betriebsphasen, in denen die Verbrennungskraftmaschine mit einem stöchiometrischen Sauerstoffüberschuss betrieben wird, Stickoxide NO_{X} absorbieren. In wiederkehrenden Intervallen wird der NO_{X}-Speicherkatalysator einer NO_{X}-Regeneration unterworfen, um seine ursprüngliche NO_{X}-Speicherkapazität wieder herzustellen. Dabei wird der Katalysator bei einer Mindesttemperatur, die eine NO_{X}-Desorptionstemperatur überschreitet, mit einer fetten (unterstöchiometrischen), also kraftstoffreichen Abgasatmosphäre mit Lambda < 1 beaufschlagt. Unter katalytischer Unterstützung des NO_{X}-Speicherkatalysators wird das bei diesem Prozess desorbierte NO_{X} durch unvollständig verbrannte Kohlenwasserstoffe HC, Kohlenmonoxid CO und Wasserstoff H₂ des Abgases zu Stickstoff N₂ reduziert. Gleichzeitig wird bei der NO_{X}-Regeneration Sauerstoff, der ebenfalls in den NO_{X}-Speicherkatalysator, aber auch in einen häufig vorgeschalteten Vorkatalysator einlagert, entfernt. Nach Beendigung der NO_{X}-Regeneration wird die Verbrennungskraftmaschine üblicherweise wieder in den häufig als Schichtmodus durchgeführten Magerbetrieb umgeschaltet.

Ein Problem stellen Betriebssituationen dar, in denen betriebspunktabhängig eine Umschaltung der Verbrennungskraftmaschine unmittelbar nach der NO_{X}-Regeneration in einen stöchiometrischen Betrieb mit Lambda = 1 erforderlich ist. Dieses Erfordernis ist beispielsweise bei einer hohen Lastanforderung, wie etwa Beschleunigung oder Vollgas, gegeben. Die stöchiometrischen Betriebsbedingungen werden in der Regel in einem Homogenmodus realisiert, bei dem in einem gesamten Verbrennungsraum eines Zylinders der Verbrennungskraftmaschine eine gleichmäßige Aufbereitung eines Luft-Kraftstoff-Gemisches erzeugt wird. Der nach der NO_{X}-Regeneration vollkommen entleerte Sauerstoffspeicher des Vorkatalysators und des NO_{X}-Speicherkatalysators bewirkt, dass geringste Abweichungen des Luft-Kraftstoff-Gemisches in Richtung Lambda < 1 zu unmittelbaren Schadstoffdurchbrüchen, insbesondere von HC und CO, führen, da die Katalysatoren in Ermangelung von nennenswerten Oxidationsmittelmengen im Abgas oder in ihren Sauerstoffspeichern keine Oxidation dieser Schadstoffe bewirken können. Abweichungen von dem Lambda-Sollwert von 1 treten insbesondere während einer Einregelungsdauer aufgrund einer gewissen Trägheit der Lambdaregelung auf. Die Trägheit der Regelung wird einerseits bedingt durch die Trägheit eines Reglers selbst sowie durch Laufzeiten des Abgases von der Verbrennungskraftmaschine bis zu einer ersten Lambdasonde, die den Ist-Lambdawert im Abgas erfasst.

Aufgabe der vorliegenden Erfindung ist es daher, ein Verfahren zur NO_{X}-Regeneration eines NO_{X}-Speicherkatalysators zu entwickeln, mit welchem eine Schadstoffemission von HC und CO in einer unmittelbar an eine NO_{X}-Regeneration anschließenden stöchiometrischen Betriebsphase einer Verbrennungskraftmaschine gesenkt werden kann.

Diese Aufgabe wird durch ein Verfahren mit den Merkmalen des Anspruchs 1 gelöst. Erfindungsgemäß ist vorgesehen, dass in einem Anschluss an die NO_{X}-Regeneration und bei Vorliegen einer homogenen Betriebsartenanforderung mit Lambda = 1 ein Magerschub durchgeführt wird, wobei die Verbrennungskraftmaschine für eine Dauer mit einem zumindest leicht mageren Luft-Kraftstoff-Verhältnis mit Lambda > 1 betrieben wird, ehe sie in einen im wesentlichen stöchiometrischen Betriebsmodus umgeschaltet wird. Der Magerschub bewirkt, dass der NO_{X}-Speicherkatalysator und diesem eventuell vorgeschaltete weitere Katalysatoren für die Dauer des Magerschubs mit einem wenigstens leichten Sauerstoffüberschuss beaufschlagt werden. Der Magerschub reicht aus, um eine Einlagerung zumindest geringer Mengen von Sauerstoff in die Katalysatoren zu bewirken. Nachfolgende Lambdaamplituden in Richtung einer fetten Abgaszusammensetzung können dann kompensiert werden, indem unvollständig oder unverbrannte Kohlenwasserstoffe HC und Kohlenmonoxid CO durch den eingelagerten Sauerstoff konvertiert werden.

Die Durchführung des Verfahrens kann entweder gesteuert oder geregelt erfolgen. Für die Steuerung werden feste Werte für die Dauer und das Luft-Kraftstoff-Verhältnis des Magerschubs vorgegeben. in einer vorteilhaften Ausgestaltung des gesteuert durchgeführten Verfahrens beträgt die Dauer des Magerschubs 0,2 bis 5 Sekunden, vorteilhafterweise 0,7 bis 2,5 Sekunden. Gleichzeitig hat sich hierbei eine Vorgabe für das Luft-Kraftstoff-Verhältnis des Magerschubs von 1,01 bis 1,1, insbesondere von 1,02 bis 1,05, als vorteilhaft erwiesen.

Nach einer besonders vorteilhaften Ausgestaltung des Verfahrens wird der Magerschub geregelt durchgeführt. Dafür wird die Dauer des Magerschubs mittels eines stromab des Vorkatalysators gemessenen Lambda- oder Spannungswertes geregelt, wobei die Verbrennungskraftmaschine solange mit einem vorgebbaren Luft-Kraftstoff-Verhältnis > 1 betrieben wird, bis der stromab des Vorkatalysators gemessene Lambdaoder Spannungswert eine vorgebbare Lambdaschwelle überschreitet oder eine vorgebbare Spannungsschwelle unterschreitet. Vorzugsweise entspricht die vorgebbare Lambdaschwelle einem gemessenen Lambdawert von 1,005 bis 1,02. Hierbei kann außerdem eine Mindestdauer vorgegeben werden, während der die Lambdaschwelle überschritten werden muss, ehe der Magerschub beendet wird. Diese Mindestdauer beträgt vorteilhafterweise 0 bis 1500 ms, insbesondere 500 bis 1000 ms. Durch die Vorgabe der Mindestdauer wird sichergestellt, dass eine Abgaslaufzeit zwischen einer Messstelle des Lambdawertes stromab des Vorkatalysators und nachgeschalteter Katalysatoren, insbesondere dem NO_{X}-Speicherkatalysator, berücksichtigt wird. Der Lambda- oder Spannungswert stromab des Vorkatalysators wird vorzugsweise mit einer hier angeordneten Lambdasonde, insbesondere einer Sprungantwort-Lambdasonde, gemessen. Sprungantwort-Lambdasonden haben den Vorteil einer sehr hohen Auflösung von Lambdawerten nahe 1.

Nach einer alternativen Ausgestaltung der Regelung des Magerschubs wird die Dauer des Magerschubs mittels eines stromab des NO_{X}-Speicherkatalysators gemessenen Lambdawertes geregelt. Hierbei wird die Verbrennungskraftmaschine solange mit einem vorgebbaren Luft-Kraftstoff-Verhältnis > 1 betrieben, bis der stromab des NO_{X}-Speicherkatalysators gemessene Lambda- oder Spannungswert eine vorgebbare Lambdaschwelle überschreitet oder eine vorgebbare Spannungsschwelle unterschreitet. Der Lambda- oder Spannungswert kann entweder wiederum mit einer Lambdasonde, insbesondere einer Sprungantwort-Lambdasonde oder aber mit einem NO_{X}-Sensor gemessen werden, der stromab des NO_{X}-Speicherkatalysators angeordnet ist und der zusätzlich über eine Lambdasignalausgabe verfügt. Diese Ausgestaltung des Verfahrens ist besonders dann vorteilhaft, wenn ohnehin eine Lambdasonde oder ein NO_{X}-Sensor dem Speicherkatalysator nachgeschaltet ist, beispielsweise um diesen zu überwachen. Die Lambdaschwelle wird auch hier vorteilhaft zwischen 1,005 bis 1,02 gewählt. Entsprechend der vorhergehend erläuterten Ausführung kann auch hier eine Mindestdauer vorgegeben werden, für die die Lambdaschwelle stromab des NO_{X}-Speicherkatalysators überschritten werden muss, ehe die Verbrennungskraftmaschine in den stöchiometrischen Betriebsmodus umgeschaltet wird. Aufgrund der hinsichtlich des Abgasweges späten Messung des Lambdawertes sollte hier die Mindestdauer kürzer als in der vorherigen Ausführung gewählt werden. Sie beträgt vorzugsweise 0 bis 1000 ms, insbesondere 100 bis 500 ms.

Weitere vorteilhafte Ausgestaltungen der Erfindung sind Gegenstand der übrigen Unteransprüche.

Die Erfindung wird nachfolgend in Ausführungsbeispielen anhand der zugehörigen Zeichnungen näher erläutert. Es zeigen:
- Figur 1: schematisch einen typischen Aufbau einer Abgasanlage einer Verbrennungskraftmaschine;
- Figur 2: Verlauf des Luft-Kraftstoff-Verhältnisses einer Verbrennungskraftmaschine und einer HC-Emission während und nach einer Entschwefelung und
- Figur 3: Verlauf der Lambdavorgabe und des Lambdawertes stromab des NO_{X}-Speicherkatalysators während eines Magerschubs nach einer Ausgestaltung der Erfindung.

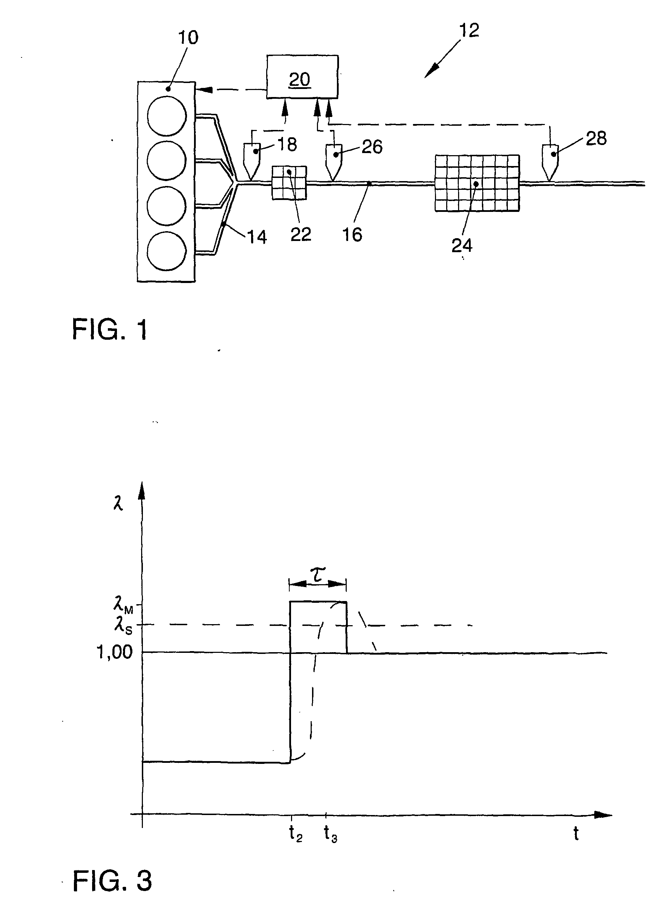

Figur 1 zeigt eine vierzylindrige Verbrennungskraftmaschine 10 mit einer nachgeschalteten Abgasanlage 12. Aus den Zylindern der Verbrennungskraftmaschine 10 kommende Abgase münden in einen Krümmer 14 und werden anschließend in einen gemeinsamen Abgaskanal 16 vereinigt. Ein der Verbrennungskraftmaschine 10 zuzuführendes Luft-Kraftstoff-Gemisch wird mittels einer ersten im Abgaskanal angeordneten Lambdasonde 18, insbesondere einer Breitband-Lambdasonde, und einer Regeleinrichtung 20 geregelt. Die Breitband-Lambdasonde 18 erfasst eine Sauerstoffkonzentration im Abgas und übermittelt ein der Sauerstoffkonzentration proportionales Spannungssignal an die Regeleinrichtung 20. Diese vergleicht den gemessenen Lambdawert (Ist-Lambda) mit einer Lambdavorgabe (Soll-Lambda) und beeinflusst das der Verbrennungskraftmaschine 10 zuzuführende Luft-Kraftstoff-Gemisch solange, bis der gemessene Wert mit der Vorgabe übereinstimmt. Diese Lambdaregelung ist bekannt und soll hier nicht näher erläutert werden. Stromab von der Breitband-Lambdasonde 18 ist an einer relativ motornahen Position ein kleinvolumiger Vorkatalysator 22, der besonders vorteilhaft als Drei-Wege-Katalysator ausgestaltet ist, in dem Abgaskanal 16 angeordnet. Der Vorkatalysator 22 fördert gleichzeitig die Oxidation von unverbrannten Kohlenwasserstoffen HC und Kohlenmonoxid CO sowie die Reduktion von Stickoxiden NO_{X}. Stromab von dem Vorkatalysator 22, üblicherweise an einer Unterbodenposition eines Kraftfahrzeuges, befindet sich ein NO_{X}-Speicherkatalysator 24. Der NO_{X}-Speicherkatalysator 24 lagert in Magerphasen der Verbrennungskraftmaschine 10 in einem Überschuss vorhandenes NO_{X} ein und reduziert dieses während NO_{X}-Regenerationsintervalle des NO_{X}-Speicherkatalysators 24, in denen die Verbrennungskraftmaschine 10 mit einem fetten (unterstöchiometrischen) Luft-Kraftstoff-Gemisch betrieben wird, zu N₂. Eine dem Vorkatalysator 22 nachgeschaltete Sprungantwort-Lambdasonde 26 dient einerseits einer Feinregulierung des Luft-Kraftstoff-Verhältnisses der Verbrennungskraftmaschine 10 und kann andererseits der noch zu erläuternden Regelung des erfindungsgemäßen Verfahrens dienen. Dem NO_{X}-Speicherkatalysator 24 ist ein NO_{X}-Sensor 28 nachgeschaltet und dient der Überwachung des NO_{X}-Speicherkatalysators 24. Beispielsweise erkennt er anhand eines NO_{X}-Durchbruches eine Regenerationsnotwendigkeit des NO_{X}-Speicherkatalysators 24. Auch ein von dem NO_{X}-Sensor 28 ausgegebenes Lambda-Signal kann zur Regelung des erfindungsgemäßen Verfahrens herangezogen werden. Alternativ oder zusätzlich kann dem NO_{X}-Speicherkatalysator 24 auch eine Sprungantwort-Lambdasonde nachgeschaltet werden.

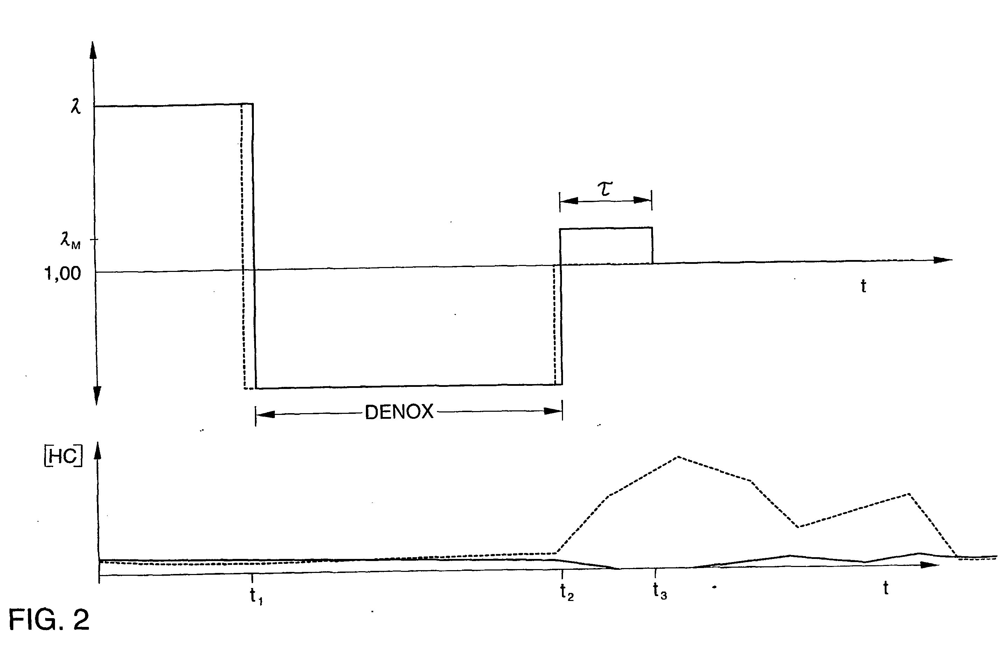

Im oberen Teil der Figur 2 ist ein vereinfachter Verlauf einer Lambdavorgabe der Verbrennungskraftmaschine 10 vor, während und nach einer NO_{X}-Regeneration des NO_{X}-Speicherkatalysators 24 dargestellt. Dabei entspricht die gepunktete Linie dem Lambdaverlauf gemäß dem Stand der Technik, während die durchgezogene Linie den Verlauf gemäß dem erfindungsgemäßen Verfahren wiedergibt. Zur besseren Unterscheidung der beiden Verläufe sind diese beabstandet zueinander dargestellt. Im unteren Teil der Figur 2 ist auf der gleichen Zeitachse t ein stromab des NO_{X}-Speicherkatalysators 24 gemessener HC-Konzentrationsverlauf gemäß dem Stand der Technik und der Erfindung abgebildet. Zu einem Zeitpunkt t₁ wird beispielsweise mittels des NO_{X}-Sensors 28 eine NO_{X}-Regenerationsnotwendigkeit des NO_{X}-Speicherkatalysators 24 ermittelt. Infolgedessen wird die Verbrennungskraftmaschine 10 von einem mageren Lambdawert > 1 in einen fetten Betriebsmodus mit Lambda < 1 umgeschaltet (Figur 2, oberer Teil). Voraussetzung hierfür ist außerdem eine hinreichend hohe Temperatur des NO_{X}-Speicherkatalysators 24, die über einer NO_{X}-Desorptionstemperatur liegt. Unter diesen Bedingungen wird während einer NO_{X}-Regenerationsdauer DENOX NO_{X} aus dem NO_{X}-Speicher des NO_{X}-Speicherkatalysators 24 freigesetzt und gleichzeitig mittels der im Abgas im Überschuss vorhandenen Reduktionsmittel (HC, CO, H₂) konvertiert. An einem Zeitpunkt t₂ wird die NO_{X}-Regeneration beendet. Liegt zu diesem Zeitpunkt ein Betriebspunkt der Verbrennungskraftmaschine 10 vor, der einen stöchiometrischen (Lambda = 1) Homogenbetrieb erfordert (homogene Betriebsartenanforderung), war es bislang üblich, die Verbrennungskraftmaschine 10 unmittelbar im Anschluss der NO_{X}-Regeneration in den stöchiometrischen Betrieb bei Lambda = 1 umzustellen (vergleiche gestrichelte Linie). Da infolge der NO_{X}-Regeneration die Sauerstoffspeicher des NO_{X}-Speicherkatalysators 24 und auch des Vorkatalysators 22 zumindest nahezu vollständig aufgebraucht sind, steigt das Risiko, dass während einer Einregelungsdauer auf Lambda = 1 Emissionen von unverbrannten Kohlenwasserstoffen HC und Kohlenmonoxid CO nicht abgefangen werden und durchbrechen.

Die gepunktete Linie im unteren Teil der Abbildung zeigt typische HC-Emissionsspitzen im Anschluss einer NO_{X}-Regeneration gemäß dem Stand der Technik. Dieses Problem wird erfindungsgemäß dadurch überwunden, dass nach Beendigung der NO_{X}-Regeneration zum Zeitpunkt t₂ während einer kurzen Dauer τ die Verbrennungskraftmaschine 10 mit einem zumindest leicht mageren Luft-Kraftstoff-Gemisch mit λ_{M} > 1 betrieben wird. Der während dieses Magerschubs im Abgas vorhandene Sauerstoff lagert sich bereitwillig in die Sauerstoffspeicher des Vorkatalysators 22 und des NO_{X}-Speicherkatalysators 24 ein. Wird die Verbrennungskraftmaschine 10 dann nach Beendigung des Magerschubs zum Zeitpunkt t₃ in den stöchiometrischen Homogenbetrieb umgestellt, so reicht die Sauerstoffreserve in den Katalysatoren 22, 24 aus, um Lambdaamplituden in Richtung < 1 abzufangen, indem HC und CO durch den eingespeicherten Sauerstoff zu CO₂ und H₂O umgesetzt werden. Der im unteren Teil der Figur 2 beispielhaft dargestellte Verlauf der HC-Emission gemäß der vorliegenden Erfindung (durchgezogene Linie) zeigt demgemäß nur sehr geringe Schwankungen auf insgesamt niedrigem Niveau.

Im einfachsten Fall der Durchführung des Verfahrens kann die Dauer τ und das Luft-Kraftstoff-Verhältnis λ_{M} des Magerschubs fest vorgegeben werden. Dabei beträgt τ vorzugsweise 0,7 bis 2,5 Sekunden und λ_{M} 1,02 bis 1,05. Besonders vorteilhaft wird die Dauer τ des Magerschubs jedoch mittels eines Lambdasignals entweder der stromab des Vorkatalysators 22 angeordneten Sprungantwort-Lambdasonde 26 oder des dem NO_{X}-Speicherkatalysator 24 nachgeschalteten NO_{X}-Sensor 28 geregelt. Dabei wird die Verbrennungskraftmaschine 10 solange mit einem vorgebbaren Luft-Kraftstoff-Verhältnis λ_{M} > 1 betrieben, bis die Lambdasonde 26 beziehungsweise der NO_{X}-Sensor 28 einen Lambdawert registriert, der eine vorgebbare Lambdaschwelle überschreitet.

Die Regelung des erfindungsgemäßen Lambdaschubs anhand des Lambdasignals des NO_{X}-Sensors 28 ist in Figur 3 visualisiert. Hier zeigt die durchgezogene Linie die Lambdavorgabe, auf die die Verbrennungskraftmaschine 10 vor, während und nach dem Magerschub mit Hilfe der Lambdasonde 18 eingeregelt wird. Nach Beendigung der NO_{X}-Regeneration zum Zeitpunkt t₂ wird die Verbrennungskraftmaschine 10 mit einer mageren Lambdavorgabe λ_{M} betrieben. Ab diesem Zeitpunkt wird das Lambdasignal des NO_{X}-Sensors 28 verfolgt. Aufgrund der Verzögerung, mit der das magere Abgas der Verbrennungskraftmaschine 10 den NO_{X}-Sensor 28 erreicht, verharrt das Signal zunächst noch für eine kurze Weile bei dem fetten Lambdawert der NO_{X}-Regeneration, ehe er einen steilen Anstieg in Richtung magerer Werte zeigt. Zu einem Zeitpunkt t₃ erreicht das Lambdasignal des NO_{X}-Sensors 28 eine vorgebbare Lambdaschwelle λ_{S}. Die Lambdaschwelle λ_{S} liegt vorzugsweise bei einem Wert von 1,005 bis 1,02, beziehungsweise eine Sondenspannung liegt bei 200 bis 400 mV. Das Überschreiten von λ_{S} beziehungsweise das Unterschreiten der entsprechenden Sondenspannung löst die Beendigung des Magerschubs aus. Infolgedessen wird zum Zeitpunkt t₃ die Verbrennungskraftmaschine 10 durch die Betriebssituation auf den angeforderten stöchiometrischen Homogenbetrieb umgestellt. Um eine ausreichende Sauerstoffeinlagerung während des Magerschubs zu gewährleisten, kann vorteilhafterweise eine Mindestdauer vorgegeben werden, für die die Lambdaschwelle λ_{S} überschritten werden muss, ehe die Verbrennungskraftmaschine 10 in den stöchiometrischen Betrieb umgeschaltet wird (hier nicht dargestellt). Im dargestellten Beispiel, in dem die Dauer τ des Magerschubs mittels des Lambdasignals des NO_{X}-Sensors 28 geregelt wird, beträgt die Mindestdauer vorzugsweise 100 bis 500 ms. Im Falle der Regelung über das Signal der Sprungantwort-Lambdasonde 26 wird die Mindestdauer auf 500 bis 1000 ms gewählt. Die Regelung des Magerschubs mit einem der Sensoren 26, 28 empfiehlt sich besonders dann, wenn ohnehin entsprechende Sensoren in dem Abgaskanal 16 installiert sind. In diesem Fall ist die Regelung der einfachen Steuerung vorzuziehen, da die Dauer τ des Magerschubs auf die tatsächlich im Abgas vorhandene Sauerstoffkonzentration abgestimmt werden kann und somit nur so lang wie erforderlich gehalten werden kann.

### BEZUGSZEICHENLISTE

- 10: Verbrennungskraftmaschine
- 12: Abgasanlage
- 14: Krümmer
- 16: Abgaskanal
- 18: Breitband-Lambdasonde
- 20: Regeleinrichtung
- 22: Vorkatalysator
- 24: NO_{X}-Speicherkatalysator
- 26: Sprungantwort-Lambdasonde
- 28: NO_{X}-Sensor

- τ: Dauer
- λ_{S}: Lambdaschwelle
- λ_{M}: Luft-Kraftstoff-Verhältnis
- t, t₁, t₂, t₃: Zeitpunkte
- DENOX: NO_{X}-Regeneration

## Patentansprüche

1. Verfahren zur NO_{X}-Regeneration eines einer zumindest zeitweise stöchiometrisch betreibbaren Verbrennungskraftmaschine nachgeschalteten NO_{X}-Speicherkatalysators, wobei der NO_{X}-Speicherkatalysator während der NO_{X}-Regeneration zumindest zeitweise mit einer unterstöchiometrischen Abgasatmosphäre mit Lambda < 1 beaufschlagt wird, **dadurch gekennzeichnet, dass** in einem Anschluss an die NO_{X}-Regeneration (DENOX) und bei Vorliegen einer homogenen Betriebsartenanforderung mit Lambda = 1 ein Magerschub durchgeführt wird, wobei die Verbrennungskraftmaschine (10) für eine Dauer (τ) mit einem zumindest leicht mageren Luft-Kraftstoff-Verhältnis (λ_{M}) mit Lambda > 1 betrieben wird, ehe sie in einen im wesentlichen stöchiometrischen Betriebsmodus umgeschaltet wird.

2. Verfahren nach Anspruch 1, **dadurch gekennzeichnet, dass** die Dauer (τ) und das Luft-Kraftstoff-Verhältnis (λ_{M}) des Magerschubs vorgegeben werden.

3. Verfahren nach Anspruch 2, **dadurch gekennzeichnet, dass** die vorgegebene Dauer (τ) des Magerschubs 0,2 bis 5 s, insbesondere 0,7 bis 2,5 s, beträgt.

4. Verfahren nach Anspruch 2 oder 3, **dadurch gekennzeichnet, dass** das vorgegebene Luft-Kraftstoff-Verhältnis (λ_{M}) des Magerschubs 1,01 bis 1,1, insbesondere 1,02 bis 1,05, beträgt.

5. Verfahren nach Anspruch 1, **dadurch gekennzeichnet, dass** die Dauer (τ) des Magerschubs mittels eines stromab eines Vorkatalysators (22) gemessenen Lambda- oder Spannungswertes geregelt wird, wobei die Verbrennungskraftmaschine (10) solange mit einem vorgebbaren Luft-Kraftstoff-Verhältnis (λ_{M}) > 1 betrieben wird, bis der stromab des Vorkatalysators (22) gemessene Lambda- oder Spannungswert eine vorgebbare Lambdaschwelle (λ_{S}) überschreitet oder eine vorgebbare Spannungsschwelle unterschreitet.

6. Verfahren nach Anspruch 5, **dadurch gekennzeichnet, dass** die Lambdaschwelle (λ_{S}) für den stromab des Vorkatalysators (22) gemessenen Lambdawert 1,005 bis 1,02 beträgt.

7. Verfahren nach Anspruch 5 oder 6, **dadurch gekennzeichnet, dass** die vorgebbare Lambdaschwelle (λ_{S}) für eine vorgebbare Mindestdauer von 0 bis 1500 ms, insbesondere 500 bis 1000 ms, überschritten wird, ehe der Magerschub beendet wird.

8. Verfahren nach einem der Ansprüche 5 bis 7, **dadurch gekennzeichnet, dass** der Lambda- oder Spannungswert mit einer stromab des Vorkatalysators (22) angeordneten Lambdasonde, insbesondere einer Sprungantwort-Lambdasondé (26), gemessen wird.

9. Verfahren nach Anspruch 1, **dadurch gekennzeichnet, dass** die Dauer (τ) des Magerschubs mittels eines stromab des NO_{X}-Speicherkatalysators (24) gemessenen Lambdawertes geregelt wird, wobei die Verbrennungskraftmaschine (10) solange mit einem vorgegebenen Luft-Kraftstoff-Verhältnis (λ_{M}) > 1 betrieben wird, bis der stromab des NO_{X}-Speicherkatalysators (24) gemessene Lambda- oder Spannungswert eine vorgebbare Lambdaschwelle (λ_{S}) überschreitet oder eine vorgebbare Spannungsschwelle unterschreitet.

10. Verfahren nach Anspruch 9, **dadurch gekennzeichnet, dass** die Lambdaschwelle (λ_{S}) für den stromab des Vorkatalysators (22) gemessenen Lambdawert 1,005 bis 1,02 beträgt.

11. Verfahren nach Anspruch 9 oder 10, **dadurch gekennzeichnet, dass** die vorgebbare Lambdaschwelle (λ_{S}) für eine vorgebbare Mindestdauer von 0 bis 1000 ms, insbesondere 100 bis 500 ms, überschritten wird, ehe der Magerschub beendet wird.

12. Verfahren nach einem der Ansprüche 9 bis 11, **dadurch gekennzeichnet, dass** der Lambda- oder Spannungswert mit einer stromab des NO_{X}-Speicherkatalysators (24) angeordneten Lambdasonde oder NO_{X}-Sensors (26) gemessen wird.

## Claims

1. Method for NOₓ regeneration of an NOₓ storage catalytic converter which is connected downstream of an internal combustion engine which at least from time to time can be operated stoicheometrically, the NOₓ storage catalytic converter, during the NOₓ regeneration, being acted on at least from time to time by a substoicheometric exhaust-gas atmosphere with lambda < 1, **characterized in that** following the NOₓ regeneration (DENOX) and in the event of a homogenous operating mode requirement with lambda = 1, a lean shift is carried out, with the internal combustion engine (10) being operated with an at least slightly lean air/fuel ratio (λ_{M}) with lambda > 1 for a time (τ) before being switched over to a substantially stoicheometric operating mode.

2. Method according to Claim 1, **characterized in that** the time (τ) and the air/fuel ratio (λ_{M}) of the lean shift are predetermined.

3. Method according to Claim 2, **characterized in that** the predetermined time (τ) of the lean shift amounts to 0.2 to 5 s, in particular 0.7 to 2.5 s.

4. Method according to Claim 2 or 3, **characterized in that** the predetermined air/fuel ratio (λ_{M}) of the lean shift is 1.01 to 1.1, in particular 1.02 to 1.05.

5. Method according to Claim 1, **characterized in that** the time (τ) of the lean shift is regulated by means of a lambda or voltage value measured downstream of a primary catalytic converter (22), the internal combustion engine (10) being operated with a predeterminable air/fuel ratio (λ_{M}) > 1 until the lambda or voltage value measured downstream of the primary catalytic converter (22) exceeds a predeterminable lambda threshold (λ_{S}) or drops below a predeterminable voltage threshold.

6. Method according to Claim 5, **characterized in that** the lambda threshold (λ_{S}) for the lambda value measured downstream of the primary catalytic converter (22) is 1.005 to 1.02.

7. Method according to Claim 5 or 6, **characterized in that** the predeterminable lambda threshold (λ_{S}) is exceeded for a predeterminable minimum time of 0 to 1500 ms, in particular 500 to 1000 ms, before the lean shift is terminated.

8. Method according to one of Claims 5 to 7, **characterized in that** the lambda or voltage value is measured using a lambda probe, in particular a step-response lambda probe (26), arranged downstream of the primary catalytic converter (22).

9. Method according to Claim 1, **characterized in that** the time (τ) of the lean shift is regulated by means of a lambda value measured downstream of the NOₓ storage catalytic converter (24), the internal combustion engine (10) being operated with a predetermined air/fuel ratio (λ_{M}) > 1 until the lambda or voltage value measured downstream of the NOₓ storage catalytic converter (24) exceeds a predeterminable lambda threshold (λ_{S}) or drops below a predeterminable voltage threshold.

10. Method according to Claim 9, **characterized in that** the lambda threshold (λ_{S}) for the lambda value measured downstream of the primary catalytic converter (22) is 1.005 to 1.02.

11. Method according to Claim 9 or 10, **characterized in that** the predeterminable lambda threshold (λ_{S}) is exceeded for a predeterminable minimum time of 0 to 1000 ms, in particular 100 to 500 ms, before the lean shift is terminated.

12. Method according to one of Claims 9 to 11, **characterized in that** the lambda or voltage value is measured using a NOₓ sensor (26) or lambda probe arranged downstream of the NOₓ storage catalytic converter (24).

## Revendications

1. Procédé pour la régénération du NOₓ d'un catalyseur accumulateur de NOₓ raccordé en aval d'un moteur à combustion interne pouvant fonctionner au moins temporairement de façon stoechiométrique, le catalyseur accumulateur de NOₓ étant alimenté pendant la régénération du NOₓ au moins temporairement en une atmosphère de gaz d'échappement sous-stoechiométrique avec un lambda < 1, **caractérisé en ce qu'**une poussée de mélange pauvre est réalisée à la suite de la régénération du NOₓ (DENOX) et en cas de présence d'une demande d'un type fonctionnement avec un mélange homogène présentant un lambda = 1, le moteur à combustion interne (10) fonctionnant pour une durée (τ) avec un rapport air sur carburant (λ_{M}) au moins légèrement pauvre avec lambda > 1, avant qu'il ne soit commuté en un mode de fonctionnement essentiellement stoechiométrique.

2. Procédé selon la revendication 1, **caractérisé en ce que** la durée (τ) et le rapport air sur carburant (λ_{M}) de la poussée de mélange pauvre sont prédéterminés.

3. Procédé selon la revendication 2, **caractérisé en ce que** la durée prédéterminée (τ) de la poussée de mélange pauvre est de 0, 2 à 5 s, en particulier de 0, 7 à 2,5 s.

4. Procédé selon la revendication 2 ou 3, **caractérisé en ce que** le rapport prédéterminé air sur carburant (λ_{M}) de la poussée de mélange pauvre est de 1,01 à 1,1, en particulier de 1,02 à 1,05.

5. Procédé selon la revendication 1, **caractérisé en ce que** la durée (τ) de la poussée de mélange pauvre est réglée au moyen d'une valeur de lambda ou de tension mesurée en aval d'un précatalyseur (22), le moteur à combustion interne (10) fonctionnant aussi longtemps avec un rapport prédéterminable air sur carburant (λ_{M}) > 1 que la valeur de lambda ou de tension mesurée en aval du précatalyseur (22) ne dépasse pas un seuil lambda prédéterminable (λ_{S}) ou ne descend pas en-dessous d'un seuil de tension prédéterminable.

6. Procédé selon la revendication 5, **caractérisé en ce que** le seuil lambda (λ_{S}) pour la valeur de lambda mesurée en aval du précatalyseur (22) est de 1,005 à 1,02.

7. Procédé selon la revendication 5 ou 6, **caractérisé en ce que** le seuil lambda prédéterminable (λ_{S}) est dépassé pour une durée minimale prédéterminable de 0 à 1500 ms, en particulier de 500 à 1000 ms, avant que la poussée de mélange pauvre ne soit terminée.

8. Procédé selon l'une quelconque des revendications 5 à 7, **caractérisé en ce que** la valeur de lambda ou de tension est mesurée avec une sonde lambda disposée en aval du précatalyseur (22), en particulier avec une sonde lambda à réponse à un échelon (26) .

9. Procédé selon la revendication 1, **caractérisé en ce que** la durée (τ) de la poussée de mélange maigre est réglée au moyen d'une valeur de lambda mesurée en aval du catalyseur accumulateur de NOₓ (24), le moteur à combustion interne (10) fonctionnant aussi longtemps avec un rapport prédéterminable air sur carburant (λ_{M}) > 1 que la valeur de lambda ou de tension mesurée en aval du catalyseur accumulateur de NOₓ (24) ne dépasse pas un seuil lambda prédéterminable (λ_{S}) ou ne descend pas en-dessous d'un seuil de tension prédéterminable.

10. Procédé selon la revendication 9, **caractérisé en ce que** le seuil lambda (λ_{S}) pour la valeur de lambda mesurée en aval du précatalyseur (22) est de 1,005 à 1,02.

11. Procédé selon la revendication 9 ou 10, **caractérisé en ce que** le seuil lambda prédéterminable (λ_{S}) est dépassé pour une durée minimale prédéterminable de 0 à 1000 ms, en particulier de 100 à 500 ms avant que la poussée de mélange maigre ne soit terminée.

12. Procédé selon l'une quelconque des revendications 9 à 11, **caractérisé en ce que** la valeur de lambda ou de tension est mesurée avec une sonde lambda ou un capteur de NOₓ (26) disposé(e) en aval du catalyseur accumulateur de NOₓ (24).
